# EUROPEAN PATENT APPLICATION

(11) **EP 0 627 860 A1**
(43) Date of publication of application: **07.12.1994**
(21) Application number: 93924197.2
(22) Date of filing: 09.11.1993
(51) Int. Cl.: H04N 7/18, H04N 5/262

(54) **TELEVISION MONITORING APPARATUS**

(30) Priority: 10.11.1992 JP 300174/92
(71) Applicant: AIPHONE CO., LTD., Nagoya-shi, Aichi-ken 456 (JP)
(72) Inventor: NAGAYAMA, Muneto, Nagoya-shi, Aichi-ken 456 (JP); IMAI, Isao, Nagoya-shi, Aichi-ken 456 (JP); TAKEDA, Masahiko, Nagoya-shi, Aichi-ken 456 (JP)
(74) Representative: Bohnenberger, Johannes, Dr.
(86) International application number: JP9301623
(87) International publication number: WO9411994

(57) **Abstract**

With a simple circuit, it is possible to shift the image position freely without degradation of the image quality. The apparatus comprises a synchronizing signal separation circuit (3) for separating the horizontal synchronizing signal and the vertical synchronizing signal from an image signal; a variable delay circuit (11) for generating horizontal synchronizing signal which is delayed in synchronism with the horizontal synchronizing signal; a horizontal scanning pulse output circuit (13) for setting the horizontal scanning period during which the image signal is scanned after the delay; a variable delay circuit (4) for generating vertical synchronizing signal which is delayed in synchronism with the vertical synchronizing signal which is separated by the synchronizing signal separation circuit; a vertical scanning pulse output circuit (6) for setting the vertical scanning period during which the horizontal scanning lines are scanned after the delay; a horizontal deflection circuit (14) for outputting the horizontal sawtooth waveforms; and a vertical deflection circuit (7) for outputting the vertical sawtooth waveforms.

## Description

### FIELD OF INDUSTRIAL APPLICATION

This invention relates to a television monitoring system, and particularly to a television monitor device such as a television intercom system which has a simple structure, suffers no deterioration in image quality and can freely move an image position of a visitor.

### PRIOR ART AND PROBLEMS TO BE SOLVED BY THE INVENTION

A television intercom system is known from the prior art which is equipped with a door station or sub-station having a camera for receiving an image of a visitor and generate a image signal, and an in-house station or master station for receiving the image signals generated by the sub-station, wherein the image signal transmitted from the sub-station is monitored by a television monitor installed in the master station.

Among such television intercom systems, a mechanical system was proposed in Japanese Laid-open Patent Application No. 4-53382. In this mechanical system, the camera of the sub-station is provided with a pan and tilt function, and a pan and tilt control signal is transmitted from the master station to the sub-station to control a tilt-up and tilt-down motor and a pan-leftward and pan-rightward motor, thereby preventing the picture of the visitor from disappearing from the screen of the television monitor. In this television intercom system, the camera is driven by the tilt-up and tilt-down motor and the pan-leftward and pan-rightward motor, for which purpose mechanical parts are used. Therefore, there are problems such as the adverse effect on its effective life due to friction etc. of mechanical parts, increase in the number of parts, and delay of the pan and tilt operation. Further, there is also a problem in that complicated control circuitry for the pan and tilt control signal transmitted from the master station to the sub-station must be provided in the master station and sub-station.

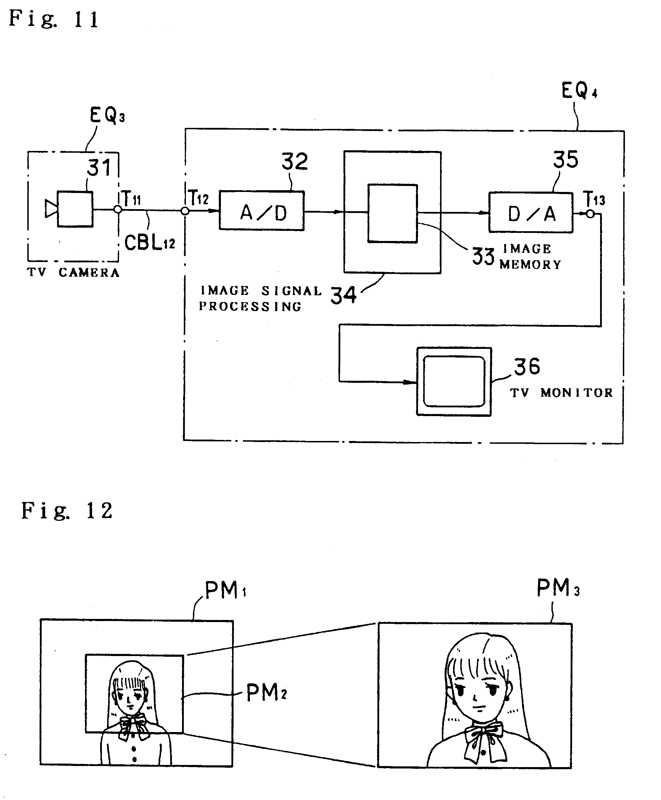

On the other hand, a television intercom system as disclosed in Japanese Laid-open Patent Application No. 2-114786 has been proposed as a digital system. In this digital system, an image memory is provided, and the image memory is subjected to various kinds of digital video techniques to enlarge an image at the lower edge of the screen. This television intercom system has functions different from the pan and tilt function, and fulfills a great many functions. Further, it has an advantage in that complicated control circuitry for the pan and tilt control signal is not required in the master station and the sub-station, and the number of mechanical parts can be reduced. Indeed, on the contrary, image signal processing must be conducted by a television intercom system shown in Fig. 11. This television intercom system, as shown in Fig. 11, comprises a sub-station EQ₃ equipped with a television camera 31, an A/D conversion circuit 32, a image signal processing circuit 34 having an image memory 33, and a master station EQ₄ equipped with a D/A conversion circuit 35 and a television monitor 36. A terminal T₁₁ of the sub-station EQ₃ and a video signal input terminal T₁₂ of the master station EQ₄ are connected to each other through a cable CBL₁₂. The video signal input terminal T₁₂ of the master station EQ₄ is connected to the input side of the A/D conversion circuit 32, and the output side of the A/D conversion circuit 32 is connected to the input side of the D/A conversion circuit 35 via the image signal processing circuit 34. Further, the output side of the D/A conversion circuit 35 is connected to the television monitor 36 via the video signal monitor terminal T₁₃.

In the television intercom system described above, a video signal input to the video signal input terminal T₁₂ of the master station EQ₄ is converted by the A/D conversion circuit 32 to a digital video signal, then stored in an original screen area of the image memory 33 which is provided in the image signal processing circuit 34. With respect to the screen area of the image memory 33, assuming that the number of picture elements per horizontal scanning line is 910(63.49µS) and the number of scanning lines of odd and even fields is 262.5, when a cut-out screen PM₂ which is cut out from the original screen PM₁ of the image memory 33, as shown in Fig. 12, is a quarter of the original screen PM₁ , an enlarged screen PM₃ is equal in size to the original screen PM₁.

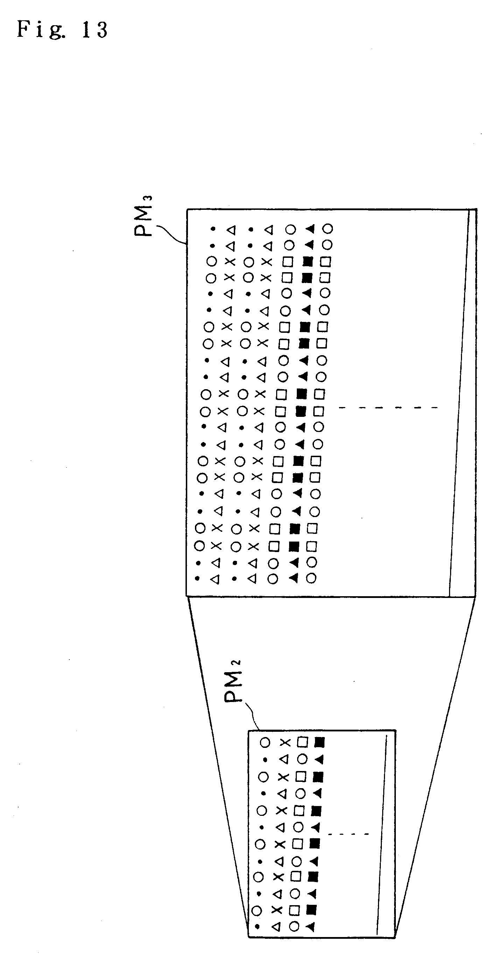

In this case, the method of composing the enlarged frame PM₃ from the cut-out frame PM₂ is as follows. The picture elements of the cut-out frame PM₂ are twice continuously accessed as shown in Fig. 13 to compose a unit horizontal scanning line. In this state, the vertical direction is not enlarged. Therefore, in order enlarge the vertical direction, two unit horizontal scanning lines are continuously accessed to compose first and third horizontal scanning lines of an odd field. After the composition of the odd field is completed in the manner described above, an even field is then composed in the same manner.

As described above, in the composition method of the enlarged screen PM₃, an unnecessary horizontal scanning line is contained in the even field, thus there occurs a problem in that resolution in the horizontal direction is lowered. Also, there is a problem in that the proportions of the original screen PM₁ and the cut-out screen PM₂ are limited to 1/4, 1/16, ... Further, due to conversion noise of the A/D conversion circuit 32 and the D/A conversion circuit 35, not only does image quality deteriorate, but the image memory 33 must also be provided.

### OBJECT OF THE INVENTION

This invention was arrived at in view of the foregoing, and has as its first object to provide a television monitoring system with simple circuit construction in which deterioration in image quality can be suppressed and image position can be freely moved without using an image memory.

A second object of this invention is to provide a television intercom system with simple circuit construction in which deterioration in image quality can be suppressed and the image position of a visitor can be freely moved using no image memory.

### MEANS FOR SOLVING THE PROBLEMS

The television monitoring system according to this invention includes a sub-station having a camera for generating a image signal, and a master station for receiving the image signal generated in the sub-station, wherein the master station includes a synchronizing signal separation circuit for separating a horizontal synchronizing signal and a vertical synchronizing signal from the received image signal, horizontal synchronizing variable delay means for generating a delayed horizontal synchronizing signal in synchronism with the horizontal synchronizing signal separated by the synchronizing signal separation circuit, horizontal scanning pulse output means for setting a horizontal scanning period for which the image signal is scanned after the delay operation of the horizontal synchronizing variable delay means, vertical synchronizing variable delay means for generating a delayed vertical synchronizing signal in synchronism with the vertical synchronizing signal separated in the synchronizing signal separation circuit, vertical scanning pulse output means for setting a vertical scanning period for which the horizontal scanning lines of the horizontal scanning period are scanned after the delay operation of the vertical synchronizing variable delay means, a horizontal deflection circuit which is connected to the horizontal scanning pulse output means and outputs a horizontal sawtooth wave, and a vertical deflection circuit which is connected to the vertical scanning pulse output means and outputs a vertical sawtooth wave.

The television intercom system according to this invention includes a sub-station having a camera for receiving an image of a visitor and generating a image signal, and a master station for receiving the image signal generated in the sub-station, the master station including a synchronizing signal separation circuit for separating a horizontal synchronizing signal and a vertical synchronizing signal from the received image signal, horizontal synchronizing variable delay means for generating a delayed horizontal synchronizing signal in synchronism with the horizontal synchronizing signal separated by the synchronizing signal separation circuit, horizontal scanning pulse output means for setting a horizontal scanning period for which the image signal is scanned after the delay operation of the horizontal synchronizing variable delay means, vertical synchronizing variable delay means for generating a delayed vertical synchronizing signal in synchronism with the vertical synchronizing signal separated in the synchronizing signal separation circuit, vertical scanning pulse output means for setting a vertical scanning period for which the horizontal scanning lines of the horizontal scanning period are scanned after the delay operation of the vertical synchronizing variable delay means, a horizontal deflection circuit which is connected to the horizontal scanning pulse output means and serves to output a horizontal sawtooth wave, and a vertical deflection circuit which is connected to the vertical scanning pulse output means and serves to output a vertical sawtooth wave.

### OPERATION

The horizontal synchronizing signal and the vertical synchronizing signal are separated in the synchronizing signal separation circuit provided in the master station. The delayed horizontal synchronizing signal is generated in synchronism with the horizontal synchronizing signal by the horizontal synchronizing variable delay means. After the generation of the delayed horizontal synchronizing signal, the horizontal scanning period for which the image signal is scanned is set by the horizontal scanning pulse output means. Further, the delayed vertical synchronizing signal is generated in synchronism with the vertical synchronizing signal by the vertical synchronizing variable delay means. After the delayed vertical synchronizing signal is generated, the vertical scanning period for which the horizontal scanning lines of the horizontal scanning period are scanned from the upper side to the lower side is set by the vertical scanning pulse output means. The horizontal deflection circuit and the vertical deflection circuit are driven by the horizontal scanning pulse output means and the vertical scanning pulse output means to transmit the desired horizontal sawtooth wave and vertical sawtooth wave to a deflection coil of an image receiving tube of the television monitor. By means of the delayed horizontal and vertical synchronizing signals, the image position can be freely moved.

### BRIEF DESCRIPTION OF THE DRAWINGS

Fig. 1 is a block diagram showing an embodiment of a television intercom system according to the present invention.

Fig. 2 is a block diagram showing an embodiment in which a vertical synchronizing variable delay circuit according to the present invention is provided with a monostable multivibrator.

Fig. 3 is a block diagram showing an embodiment in which the vertical synchronizing variable delay circuit according to the present invention is provided with an operational amplifier.

Fig. 4 is a block diagram showing an embodiment in which the vertical synchronizing variable delay circuit according to the present invention is provided with an operational amplifier.

Fig. 5 is a block diagram showing an embodiment in which the vertical synchronizing variable delay circuit according to the present invention is provided with an operation amplifier.

Fig. 6 is a block diagram showing an embodiment in which the vertical synchronizing variable delay circuit according to the present invention is provided with a timer IC.

Fig. 7 is a block diagram showing an embodiment in which the vertical synchronizing variable delay circuit according to the present invention is provided with a counter IC.

Fig. 8 is a block diagram showing an embodiment in which the vertical synchronizing variable delay circuit according to the present invention is provided with a CPU.

Fig. 9 is a time chart diagram of a vertical synchronizing signal of the television intercom system according to the present invention.

Fig. 10 is a time chart diagram of a horizontal synchronizing signal of the television intercom system according to the present invention.

Fig. 11 is a block diagram showing a conventional television intercom system.

Fig. 12 is a diagram showing the image zoom structure of a conventional television intercom system.

Fig. 13 is a diagram showing image zoom scanning of a conventional television intercom system.

### EMBODIMENT

An embodiment in which a television monitoring system according to the present invention is applied to a television intercom system will be described with reference to the accompanying drawings.

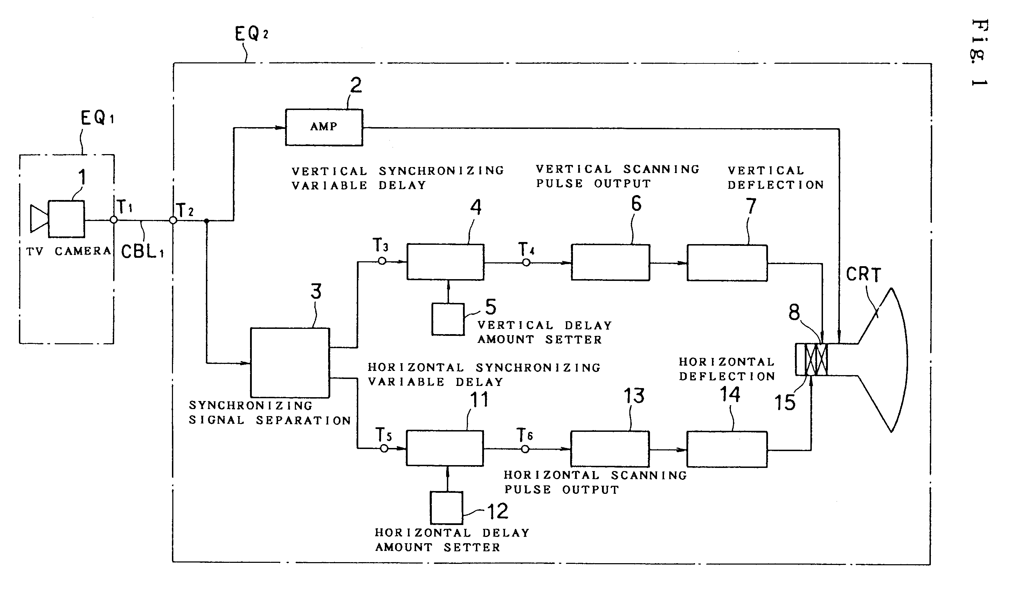

As shown in Fig. 1 , the television intercom system according to the present invention includes a sub-station EQ₁ having a television camera 1 for receiving an image of a visitor and generating a image signal thereof, and a master station EQ₂ for receiving the image signal generated in the sub-station EQ₁. The television camera 1 of the sub-station EQ₁ is equipped with a wide-angle lens (not shown).

The master station EQ₂ includes a image signal amplifying circuit 2 for amplifying the received image signal , a synchronizing signal separation circuit 3 for separating a horizontal synchronizing signal and a vertical synchronizing signal from the received image signal, a horizontal synchronizing variable delay circuit 11 for generating a delayed horizontal synchronizing signal in synchronism with the horizontal synchronizing signal separated in the synchronizing signal separation circuit, a horizontal scanning pulse output circuit 13 for setting a horizontal scanning period for which the image signal is scanned after the delay operation of the horizontal synchronizing variable delay circuit, a vertical synchronizing variable delay circuit 4 for generating a delayed vertical synchronizing signal in synchronism with the vertical synchronizing signal separated in the synchronizing signal separation circuit, a vertical scanning pulse output circuit 6 for setting a vertical scanning period for which the horizontal scanning lines of the horizontal scanning period are scanned from the upper side to the lower side after the delay operation of the vertical synchronizing variable delay circuit, a horizontal deflection circuit 14 which is connected to the horizontal scanning pulse output circuit and serves to output a sawtooth wave, and a vertical deflection circuit 7 which is connected to the vertical scanning pulse output circuit and serves to output a vertical sawtooth wave.

The vertical synchronizing variable delay circuit 4 is connected to a vertical delay amount setter 5, and the horizontal synchronizing variable delay circuit 11 is connected to a horizontal delay amount setter 12.

An image receiving tube CRT includes a vertical deflection coil 8 and a horizontal deflection coil 15 which are supplied with the sawtooth waves respectively output from the vertical deflection circuit 7 and the horizontal deflection circuit 14.

The terminal T₁ of the sub-station EQ₁ and the terminal T₂ of the master station EQ₂ are connected to each other via a cable CBL₁.

This connection will be further described. The terminal T₂ of the master station EQ₂ is connected to each of the input sides of the image signal amplifying circuit 2 and the synchronizing signal separation circuit 3, and the output of the image signal amplifying circuit 2 is supplied to the image receiving tube CRT. One output side of the synchronizing signal separation circuit 3 is connected via the vertical synchronizing input terminal T₃ to the input side of the vertical synchronizing variable delay circuit 4 to which the vertical delay amount setter 5 is connected. Further, the output side of the vertical synchronizing variable delay circuit 4 is connected to the input side of the vertical scanning pulse output circuit 6 via the delayed vertical synchronizing signal output terminal T₄, and the output side of the vertical scanning pulse output circuit 6 is connected to the vertical deflection coil 8 via the vertical deflection circuit 7.

The other output side of the synchronizing signal separation circuit 3 is connected via the horizontal synchronizing signal input terminal T₅ to the input side of the horizontal synchronizing variable delay circuit 11 to which the horizontal delay amount setter is connected. The output side of the horizontal synchronizing variable delay circuit 11 is further connected to the input side of the horizontal scanning pulse output circuit 13 via the delayed horizontal signal output terminal T₆, and the output side of the horizontal scanning pulse output circuit 13 is connected to the horizontal deflection coil 15 via the horizontal deflection circuit 14.

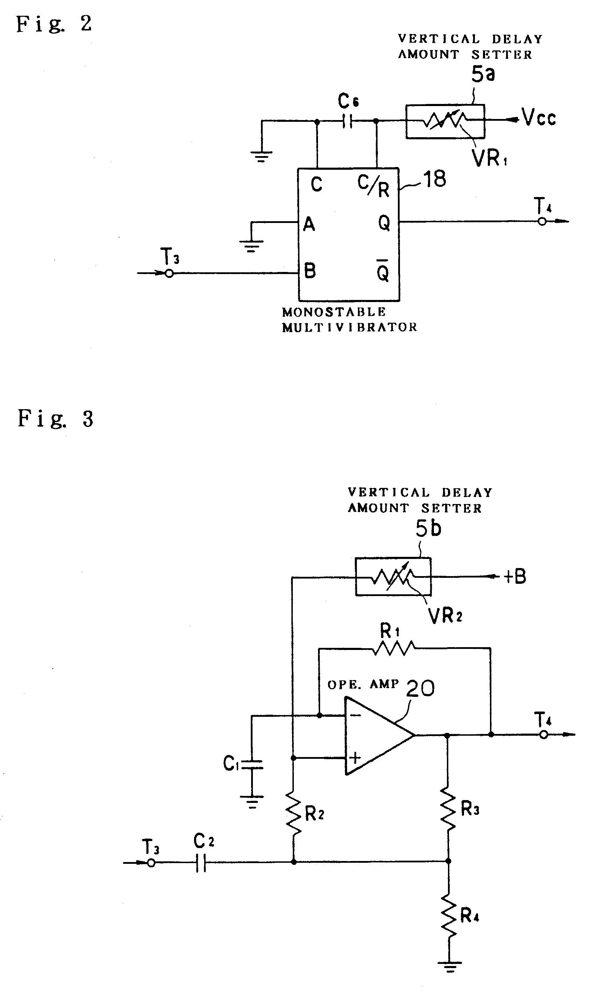

As shown in Fig. 2, the vertical synchronizing variable delay circuit 4 comprises a monostable multivibrator. A capacitor C₆, one end of which is connected to a reference potential point, is connected across a C-terminal and a C/R terminal of the monostable multivibrator 18, and the other end of the capacitor C₆ is connected to a vertical delay amount setter 5a provided with a variable resistor VR₁. Further, the other end of the vertical delay amount setter 5a is connected to a power source of +Vcc, and a B-terminal is connected to the vertical synchronizing signal input terminal T₃. A Q-terminal is connected to the delayed vertical synchronizing signal output terminal T₄, and an A-terminal is connected to the reference potential point.

As shown in Fig. 3, the vertical synchronizing variable delay circuit 4 may be constructed using an operational amplifier 20 and a vertical delay amount setter 5b which comprises a variable resistor VR₂ . In this case, the (-) terminal of the operational amplifier 20 is connected to one end of a capacitor C₁ , the other end of which is connected to a reference potential point, and this (-) terminal is also connected to the output side of the operational amplifier 20 through a resistor R₁. Further, the (+) terminal is connected to one end of the variable resistor VR₂ of the vertical delay amount setter 5b, the other end of which is connected to a power source of +B, and this (+) terminal is also connected to the output side of the operational amplifier 20, which is connected to a delayed vertical synchronizing signal output terminal T₄, via resistors R₂ and R₃. Further, a connection point between the resistors R₂ and R₃ is connected to one end of a resistor R₄, the other end of which is connected to a reference potential point. A vertical synchronizing signal input terminal T₃ is connected to a connection point between the resistors R₂ and R₃ through a capacitor C₂.

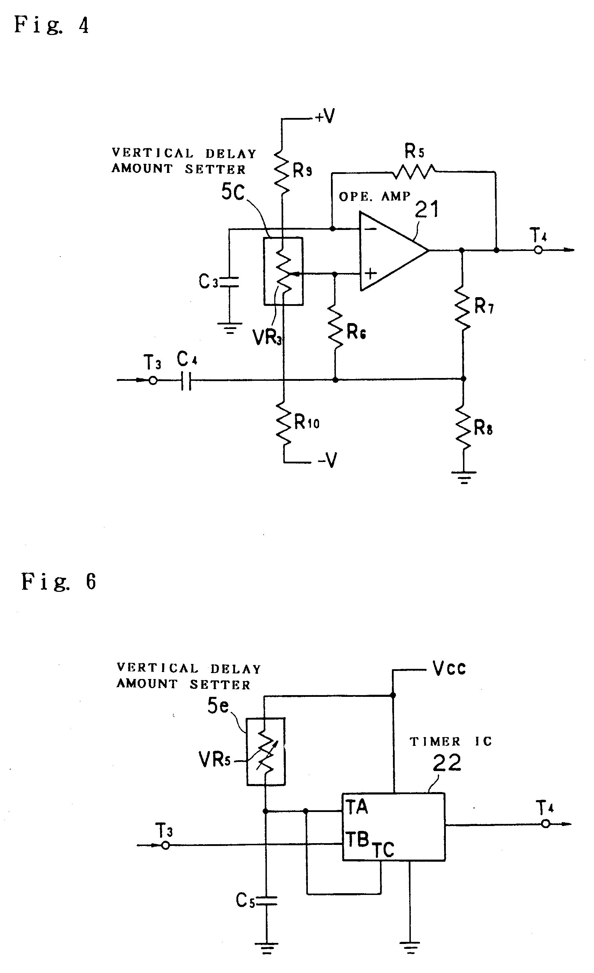

As shown in Fig. 4, the vertical synchronizing variable delay circuit 4 may also be constructed using an operational amplifier 21 and a vertical delay amount setter 5c which comprises a variable resistor VR₃. In this case, the (-) terminal of the operational amplifier 21 is connected to one end of a capacitor C₃, the other end of which is connected to a reference potential point, and this (-) terminal is connected to the output side of the operational amplifier 21 via a resistor R₅. Also, a variable intermediate point of a variable resistor VR₃ of the vertical delay amount setter 5c, one end of which is connected to a power source of +V, is connected to the (+) terminal, and this (+) terminal is connected through resistors R₆ and R₇ to the output side of the operational amplifier 21, to which a delay vertical synchronizing signal output terminal T₄ is connected. Further, a connection point between the resistors R₆ and R₇ is connected to one end of a resistor R₈, the other end of which is connected to a reference potential point. A vertical synchronizing signal input terminal T₃ is connected via a capacitor C₄ to a connection point between the resistors R₆ and R₇. Further, one end of a resistor R₁₀, the other end of which is connected to a power source of -V, is connected to the variable resistor VR₃.

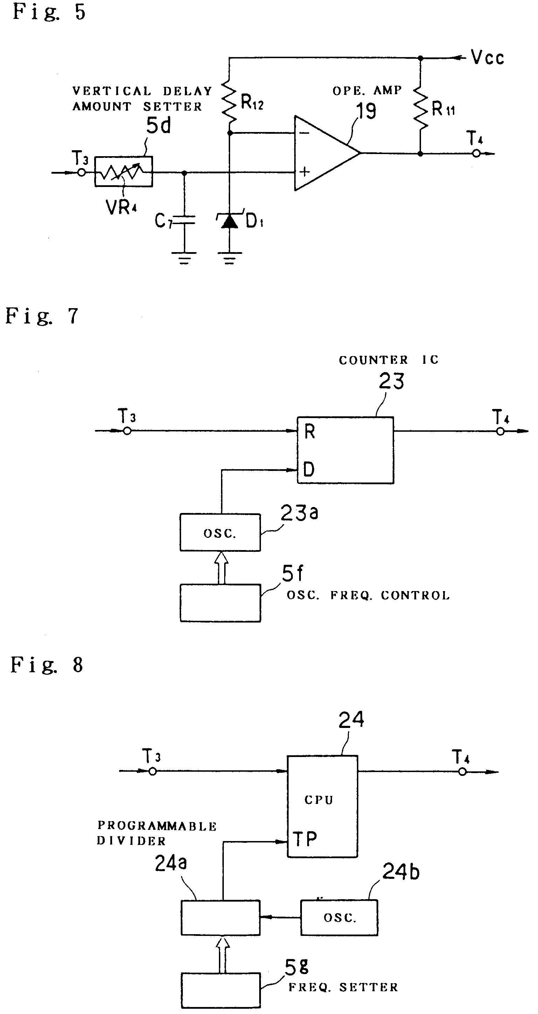

Further, as shown in Fig. 5, the vertical synchronizing variable delay circuit 4 can also be constructed using an operational amplifier 19 and a vertical delay amount setter 5d which comprises a variable resistor VR₄. In this structure, the (-) terminal of the operational amplifier 19 is connected to one end of a Zener diode D₁, the other end of which is connected to a reference potential point, and this (-) terminal is connected to a power source Vcc vi a a resistor R₁₂. Also, the output side of the operational amplifier 19 which is connected to the delay vertical synchronizing signal output terminal T₄ is connected to a resistor R₁₁, one end of which is connected to the power source Vcc. Further, the variable resistor VR₄ of the vertical delay amount setter 5d connected to a vertical synchronizing signal input terminal T₃ is connected to the (+) terminal of the operational amplifier 19, and this (+) terminal is connected to one end of a capacitor C₇, the other end of which is connected to a reference potential point.

As shown in Fig. 6, the vertical synchronizing variable delay circuit 4 may also be constructed using a timer IC 22 and a vertical delay amount setter 5e which comprises a variable resistor VR₅. In this embodiment, the terminal TA of the timer IC 22 is connected to a power source Vcc via the variable resistor VR₅ of a vertical delay amount setter 5e, is also connected to one end of a capacitor C₅, the other end of which is connected to a reference potential point, and the terminal TA is connected to the terminal TC. Further, the terminal TB is connected to a vertical synchronizing signal input terminal T₃, and the timer output side of the timer IC 22 is connected to a delayed vertical synchronizing signal output terminal T₄. The power-source terminal of the timer IC 22 is connected to a reference potential point and the power source Vcc.

As shown in Fig. 7, the vertical synchronizing variable delay circuit 4 can also be constructed by a counter IC 23 and an oscillation frequency controller 5f serving as a vertical delay amount setter. In this embodiment, the R-terminal of the counter IC 23 is connected to a vertical synchronizing signal input terminal T₃, and the counter output side of the counter IC 23 is connected to a delayed vertical synchronizing signal output terminal T₄. The output side of an oscillator 23a is connected to the data terminal D of the counter IC 23, and the oscillation frequency of the oscillator 23a is alterable by means of the oscillation frequency controller 5f.

As shown in Fig. 8, the vertical synchronizing variable delay circuit 4 may also be constructed by providing a CPU 24. In this embodiment, a vertical synchronizing signal input terminal T₃ is connected to a delayed vertical synchronizing signal output terminal T₄ via a CPU 24, and a delay data terminal TP of the CPU 24 is connected to a programmable divider 24a which is connected to an oscillator 24b. The division rate of the programmable divider 24a is set by a frequency setter 5g.

Further, the vertical synchronizing variable delay circuit 4 may be constructed with delay data recorded in a ROM, the delay data being read out by a vertical delay amount setter.

Also, the vertical scanning pulse output circuit 6 can be constructed by fixing the variable circuit of the vertical synchronizing variable delay circuit 4 shown in Figs. 2 to 8.

The horizontal synchronizing variable delay circuit 11 containing the horizontal delay mount setter 12 and the horizontal scanning pulse output circuit 13 are designed in the same way as the circuits shown in Figs. 2 to 8.

In the television intercom system thus constructed, the image signal which is transmitted from the television camera 1 of the sub-station EQ₁ through the cable CBL₁ is separated into the horizontal synchronizing signal and the vertical synchronizing signal in the synchronizing signal separation circuit 3 provided in the master station EQ₂. The delayed horizontal synchronizing signal is generated in synchronism with the horizontal synchronizing signal by the horizontal synchronizing variable delay circuit 11. After the generation of the delayed horizontal synchronizing signal, the horizontal scanning period for which the image signal is scanned by the horizontal scanning pulse output circuit 13 is set.

Further, the delayed vertical synchronizing signal is generated in synchronism with the vertical synchronizing signal by the vertical synchronizing variable delay circuit 4. After the generation of the delayed vertical synchronizing signal, the vertical scanning period for which the scanning lines of the horizontal scanning period are scanned from the upper side to the lower side is set by the vertical scanning pulse output circuit 6. The horizontal deflection circuit 14 and the vertical deflection circuit 7 are driven by the horizontal scanning pulse output circuit 13 and the vertical scanning pulse output circuit 6 to transmit the desired horizontal sawtooth wave and vertical sawtooth wave to the deflection coils 15 and 8 of the image receiving tube of the television monitor CRT. The delayed horizontal and vertical synchronizing signals enable the image position to be freely moved.

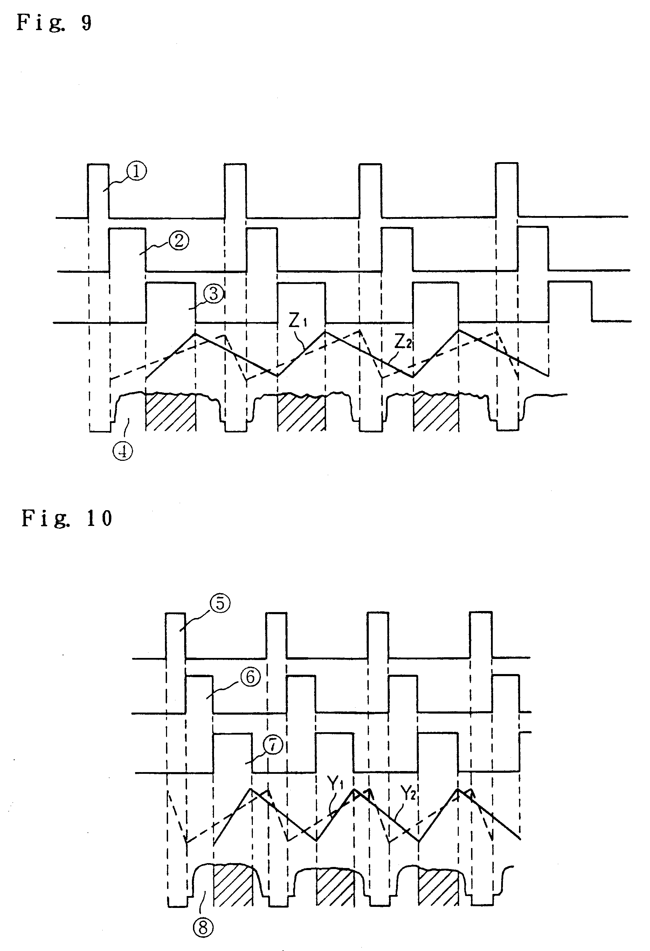

In this case, if a vertical synchronizing signal as indicated by ① of Fig. 9 is set to be delayed by the delay amount indicated by ② , the range which can be monitored becomes the range ③ , and a picture ④ is set in the range indicated by oblique lines. The duty of the sawtooth wave is set to Z₁ for the vertical scanning period, and Z₂ for the vertical flyback period, and this means that the duty as indicated by a dotted line is altered.

If a horizontal synchronizing signal as indicated by ⑤ of Fig. 10 is set to be delayed by a delay amount of ⑥ , the range which can be monitored becomes the range ⑦ , and a picture indicated by ⑧ is set in the range indicated by oblique lines. The duty of the sawtooth wave is set to Y₁ for the horizontal scanning period, and Y₂ for the horizontal flyback period, and this means that the duty indicated by a dotted line is altered.

As described above, if an upper and left portion of an original frame which is received by the television camera 1 is required to be seen, the delay amount of ② and ⑥ may be set to zero. Conversely, if a lower and right portion is required to be seen, the delay amount of ② and ⑥ may be maximized. As described above, by adjusting the delay amount of ② and ⑥ , a desired frame can be freely selected.

The total time where the vertical scanning period is Z₁ and the vertical flyback period is Z₂ is 16.66mS and the total time of the horizontal scanning period Y₁ and the horizontal flyback period Y₂ is 63.49µS, the longitudinal and lateral rate being unaltered, so that if one is determined, the other is necessarily determined.

### EFFECT OF THE INVENTION

According to the television monitoring system of the present invention, deterioration in image equality can be suppressed and the image position can be freely moved without using an image memory, by a simple circuit construction.

## Claims

1. A television monitoring system including a sub-station (EQ1) having a camera (1) for generating an image signal, and a master station (EQ2) for receiving the image signal generated in the sub-station (EQ1), wherein said master station (EQ2) includes a synchronizing signal separation circuit (3) for separating a horizontal synchronizing signal and a vertical synchronizing signal from the received image signal, horizontal synchronizing variable delay means (11) for generating a delayed horizontal synchronising signal in synchronism with the horizontal synchronising signal separated by said synchronizing signal separation circuit (3), horizontal scanning pulse output means (13) for setting a horizontal scanning period for which the image signal is scanned after the delay operation of said horizontal synchronizing variable delay means (11), vertical synchronizing variable delay means (4) for generating a delayed vertical synchronizing signal in synchronism with the vertical synchronizing signal separated in said synchronizing signal separation circuit (3), vertical scanning pulse output means (6) for setting a vertical scanning period for which the horizontal scanning lines of the horizontal scanning period are scanned after the delay operation of said vertical synchronizing variable delay means (4), a horizontal deflection circuit (14) which is connected to said horizontal scanning pulse output means (13) and serves to output a horizontal sawtooth wave, and a vertical deflection circuit (7) which is connected to said vertical scanning pulse output means (6) and serves to output a vertical sawtooth wave.

2. A television intercom system including a sub-station (EQ1) having a camera (1) for receiving an image of a visitor and generating an image signal, and a master station (EQ2) for receiving the image signal generated in the sub-station (EQ1), wherein said master station (EQ2) includes a synchronizing signal separation circuit (3) for separating a horizontal synchronizing signal and a vertical synchronizing signal from the received image signal, horizontal synchronizing variable delay means (11) for generating a delayed horizontal synchronizing signal in synchronism with the horizontal synchronizing signal separated by said synchronizing signal separation circuit (3), horizontal scanning pulse output means (13) for setting a horizontal scanning period for which the image signal is scanned after the delay operation of said horizontal synchronizing variable delay means (11), vertical synchronizing variable delay means (4) for generating a delayed vertical synchronizing signal in synchronism with the vertical synchronizing signal separated in said synchronizing signal separation circuit (3), vertical scanning pulse output means (6) for setting a vertical scanning period for which the horizontal scanning lines of the horizontal scanning period are scanned after the delay operation of said vertical synchronizing variable delay means (4), a horizontal deflection circuit (14) which is connected to said horizontal scanning pulse output means (13) and serves to output a horizontal sawtooth wave, and a vertical deflection circuit (7) which is connected to said vertical scanning pulse output means (6) and serves to output a vertical sawtooth wave.
